# EUROPEAN PATENT APPLICATION

(11) **EP 4 600 785 A1**
(43) Date of publication of application: **13.08.2025**
(21) Application number: 25154786.5
(22) Date of filing: 29.01.2025
(51) Int. Cl.: G06F 3/01, G06T 19/00, H04W 4/024

(54) **METHOD FOR DYNAMIC NAVIGATION MAPPING IN VIRTUAL REALITY ENVIRONMENTS BASED ON HYBRID**

(30) Priority: 06.02.2024 US 202418434581
(71) Applicant: Mitel Networks Corporation, Ottawa, Ontario K2K 3K1 (CA)
(72) Inventor: Naidoo, Logendra, Ottawa, K1S 0W8 (CA); Braganza, Jonathan, Ottawa, K2E 6P2 (CA); Murthy, Tejas, 560078 Bangalore (IN)
(74) Representative: McDougall, James

(57) **Abstract**

A computerized system and method for mapping a virtual reality ("VR") space includes: positioning one or more users into the VR space, wherein each user utilizes a user device to move from a first VR locale to a second VR locale within the VR space. The user's movement is communicated to a VR mapping engine in communication with a memory that can store one or more of (a) the identity of the VR user, (b) the date and time the VR user entered and exited the VR space, (c) the route taken by the VR user from the first VR locale to the second VR locale, and (d) VR constructs along the route taken by the user. The VR mapping engine generates a route between the first VR locale and second VR locale based on the user's route, and includes the VR constructs that the user encountered along the route. A wire frame processor receives instructions from the VR mapping engine to generate the route in VR and to make a map with the route accessible to other users that enter the VR space. VR drones may also be used to map the VR space.

## Description

### FIELD

This disclosure relates to systems and methods for mapping virtual reality ("VR") spaces, which are also referred to as metaverses or three-dimensional (3D) spaces. Such spaces can be mapped, for example, by recording the routes taken by one or more users and/or by one or more VR drones. A system and method of this disclosure may also identify popular VR locales based on the amount of user visits.

### BACKGROUND

Navigating virtual reality (VR) spaces, with collaborations, events, and locales (also called locations), is a challenge due to a lack of pre-existing blueprints or civic planning maps akin to physical or real-world environments. Traditional physical-world mapping solutions are inapplicable, as they rely on geographic and architectural constants that can readily be seen and measured, which VR spaces do not possess. Users seeking to move through VR spaces to reach a destination or locale (also called a destination), such as a store, a meeting, or a collaboration locale, face a navigation paradox - guidance akin to a real-world map. A VR space may be fluid and defined by multiple users, who create or otherwise change aspects of the VR space over time. Current VR navigation is not satisfactory for generating maps to guide users to different VR locations. This hinders user collaboration, user engagement, and reduces the utility of the VR space.

VR spaces have addressed navigation by using pre-appfied signposts (e.g., a static signpost is a 3D object that once placed in a virtual space does not change) or semi-static signposts (with elements that change somewhat), overhead maps, or automated guides that lead users to locales. However, these known navigation techniques are relatively static, lack dynamism and fail to adapt to VR spaces that change over time and evolve based on, for example, user contributions or deductions to the VR space. They do not capture the collective navigational intelligence that could be obtained from user behavior over time, which would provide VR space mapping information by users traveling from one VR locales to another.

Currently, mapping existing VR spaces may involve 3D scanning technology plus software that can interpret visual data to create virtual representations. Several tools are available for doing this, such as Photogrammetry^{®}, LIDAR^{®} Scanners, Unity^{®} and the Unreal Engine^{®}.

### SUMMARY

A first aspect of this disclosure provides a computerized method for mapping a virtual reality ("VR") space created by a VR server, wherein the method comprises: utilizing a user device, in communication with the VR server, positioning one or more a user into the VR space; the user utilizing the user device to move from a first VR locale to a second VR locale within the VR space; the user device or the VR server communicating the user's movement to a VR mapping engine; the VR mapping engine being in communication with a memory and the memory being configured to store (a) the identity of the VR user, (b) the date and time the VR user entered and exited the VR space, (c) the route taken by the VR user from the first VR locale to the second VR locale, (d) VR constructs along the route taken by the user, and (e) the VR locale at which the VR user started and the VR locale at which the VR user stopped; the VR mapping engine generating a route between the first VR locale and second VR locale based on the user's route, and including the VR constructs that the user encountered along the route; a wire frame processor in communication with the VR mapping engine, wherein the wireframe processor receives instructions from the VR mapping engine to generate the route in VR and to make the map accessible to a user that enters the VR space.

The method may further include the step of analysing user aggregation data to determine popular user locales in the VR space.

Each popular locale may have a rank based upon (a) the number of users who have visited it, and (b) the dates and times during which it has been visited. The rank may be made available to users.

The method may further comprise a plurality of users and the step of identifying the route may be based on a most used route to a least popular route based upon (a) the number of users who have travelled the route, and (b) the dates and times during which the route has been travelled.

The method may further include the step of mapping each route onto a VR map using the VR wireframe.

The method may further comprise the step of the VR space being expanded to add an expanded portion or contracted to exclude a contracted portion by imported schematic data to the VR server and the VR map being adjusted accordingly to include the expanded portion of the VR space or to exclude the contracted portion of the VR space.

The method may further comprise the step of the mapping engine generating signposts, arrows, lines, or other indica to position in the VR space by the VR server in order to guide the VR user to a different VR locale.

The signposts, arrows, lines, or other indicia can guide the user along a route to a predetermined VR locale and suggest an alternate route to the predetermined locale or offer a different VR locale destination.

The signposts, lines or other indicia may be overlaid onto the wireframe model before being positioned in the VR space by the VR server.

The method may further comprise a virtual drone created by the VR server, wherein the virtual drone is configured to analyse to VR space, and that may further comprise the step of the virtual drone analysing the VR space and sending communications from the VR server to the mapping engine to map the VR space.

The VR drone may be used to verify the accuracy of VR directions created by the VR user.

The directions may be continually updated.

The method may include points of interest along each route.

The method may include a content summary of each destination.

The method may further include mapping spaces outside of virtual buildings and inside of virtual buildings, by hovering a VR device on the VR space.

The method may further include the step of the GUI capability of automatically transferring the VR user from one locale to another.

A second aspect of this disclosure provides a computer system configured to map a VR space created by a VR server, wherein the system comprises: utilizing a user device, in communication with the VR server, positioning one or more a user into the VR space; the user utilizing the user device to move from a first VR locale to a second VR locale within the VR space; the user device or the VR server communicating the user's movement to a VR mapping engine; the VR mapping engine being in communication with a memory and the memory being configured to store (a) the identity of the VR user, (b) the date and time the VR user entered and exited the VR space, (c) the route taken by the VR user from the first VR locale to the second VR locale, (d) VR constructs along the route taken by the user, and (e) the VR locale at which the VR user started and the VR locale at which the VR user stopped; the VR mapping engine generating a route between the first VR locale and second VR locale based on the user's route, and including the VR constructs that the user encountered along the route; a wire frame processor in communication with the VR mapping engine, wherein the wireframe processor receives instructions from the VR mapping engine to generate the route in VR and to make the map accessible to a user that enters the VR space.

### BRIEF DESCRIPTION OF THE DRAWINGS

The subject matter of the present disclosure is particularly pointed out and distinctly claimed in this specification. A more complete understanding of the present disclosure may be obtained by referring to the written description and claims when considered in connection with the drawing figures, wherein:
FIG. 1 shows a computer system in accordance with aspects of this disclosure.
FIG. 2 shows an alternate computer system in accordance with aspects of this disclosure.
FIG. 3 shows an alternate computer system in accordance with aspects of this disclosure.
FIG. 4 shows a computer method in accordance with aspects of this disclosure.

It will be appreciated that structures, devices, and method steps in the figures are illustrated for simplicity and clarity and have not necessarily been drawn to scale. For example, the dimensions of some of the structures in the figures may be exaggerated relative to other structures to help to improve understanding of illustrated embodiments of the present disclosure.

### DETAILED DESCRIPTION

This disclosure includes systems and methods for dynamically generating navigational cues and/or maps in a VR space (also referred to herein as a VR environment, VR world, metaverse, or 3D space; a space may also be referred to as an environment, world, or landscape). The VR space may include stores, games, collaboration events and locations, and other VR locales, plus VR constructs, such as buildings, rooms, stadiums, auditoriums, playing fields, gyms, trees, lakes, rivers, mountains, beaches, oceans, and parks. By utilizing crowdsourced (i.e., users') movement and/or VR drone data, the systems and methods of this disclosure can provide a continuously updating guide to routes (also referred to herein as paths) to various points of interest, plus potentially offering alternate routes, in a VR space to assist VR users (also referred to herein as users) in navigating the VR space.

VR spaces offer unique advantages for social and professional gatherings, making them an appealing choice for collaborating. There is essentially no limit in terms of VR space, therefore physical dimensions are not a constraint. This aspect of VR allows for the creation of an expansive and intricate VR space that can accommodate essentially any number of users, which is particularly advantageous for large-scale events or collaborations that would be impossible or cost-prohibitive to conduct in the physical world.

The essentially unlimited 3D expanse in a VR space not only removes the constraints of physical space but also precipitates a need for navigation that caters to VR users - including VR users who might want a more immersive experience than what teleportation offers (teleportation is when a VR user presses a virtual button or other control and immediately is moved to a desired VR locale).

The systems and methods of this disclosure may (1) adapt guidelines from data used for mapping (e.g., virtual drones; LIDAR^{®} data apps, or others), (2) import wireframe/schematic data for the VR space, and (3) may use crowd-source data, which may be an accumulation of experiences of, and routes used in the VR space by, VR users.

Familiarity with a VR space improves with personalization, which can aid in a user's spatial awareness and orientation. For instance, if a VR user creates and/or themes a meeting room in a certain way, following directions to the meeting room or to locations within the meeting room make it easier for the VR user, or another VR user, to locate the meeting room or a location within the meeting room if the location is first familiarized by one or more users or by a VR drone using features for customization made available to users. This personalization could also be reflected in one or more dynamic maps made available to a VR user, wherein the dynamic map may include user-defined themes.

Communication events, or collaborations, often happen at natural VR user gathering points or places of interest within a VR space. Mapping these collaborations helps create a map(s) of a VR space that can highlight areas of high VR user activity and interest. Also, as VR users move to a collaboration event, the VR users' paths can be recorded to establish routes of aggregation and thoroughfares within a VR space. These routes can then be used to create pathways or instructions on a map of the VR space.

Collaborations can act as a form of crowdsourcing information in a VR space. Users might share insights or landmarks with each other that are not immediately apparent to map creators but that can be recorded and added to a VR map and are valuable for navigation in the VR space. New collaboration spaces can be identified by such data.

A system and method of this disclosure may be based locally or be cloud based. As used herein, the terms application, processor, sub-processor, module, analyzer, engine, and the like can refer to computer program instructions, encoded on computer storage medium for execution by, or to control the operation of, data processing apparatus.

Alternatively, or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially generated propagated signal. The computer storage medium is non-transitory and can also be, or be included in, one or more separate physical components or media (e.g., solid-state memory that forms part of a device, disks, or other storage devices).

As used herein, "engine" refers to a data-processing apparatus, such as a processor, configured to execute computer program instructions, encoded on computer storage medium, wherein the instructions control the operation of the engine. Alternatively, or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus.

As used herein, "database," "memory," or "storage" refers to any suitable database or electronic device for storing information, electronic files or code, including electronic files or code to be utilized to practice embodiments of this disclosure. As used herein, "server" refers to any suitable server, computer or computing device for performing functions utilized to practice embodiments of this disclosure.

Aspects of VR space mapping may include one or more of: (1) Visual data collected through virtual drones (such as Google Earth mapping vehicles) with purposeful mapping intent. (2) Processing images and determining 3D point clouds with photogrammetry software or LIDAR^{®} data applications. A 3D point cloud is an aggregation of data points in a VR space produced by 3D scanners or LIDAR^{®} systems. Each cloud point is a location in a VR space (i.e., with X, Y, and Z coordinates). More data means more accurate representations of things such as the shape, appearance of the external surfaces of buildings, and positions, shape, size, and color of constructs in the VR space. (3) A quality assurance step may be performed by artificial intelligence (A.I.) image editing routines. (4) Users can refine the personalization of a VR map as an option to augment the views with features enhancing the routes (also called paths) taken by the VR user to a VR locale.

Importing wireframe/schematic data for a VR space build-data may include one or more of: (1) Acquiring and inputting wireframe (or schematic) data into a mapping engine that transmits the data to a wire frame processor, which creates a spatial and structural representation for 3D virtualization within a VR space. (2) Using algorithms to convert 2D schematic data into 3D visuals; maintain the integrity of the original VR space design and enable immersive interaction in the VR space by VR users. (3) Introducing a basic navigation system that can auto-generate one or more signposts, waypoints, instructions (also called directions), pathways, collaboration points (also called collaborations), and points of interest (also called constructs), from the imported wireframe/schematic data. This can provide VR users with movement and exploration capabilities within the VR space (e.g., the shortest path between VR locales, a path of least distraction, path of least visual stimuli, path of more visual stimuli, path to pass by constructs of interest, etc.). (4) Implement spatial calibration techniques that propose perceived scale and orient the VR space (e.g., flat surface; uphill/downhill, height above a VR surface, traveling on water, traveling through the air, traveling above or next to VR constructs, hang gliding, traveling underwater, and/or moving fast, slow, or at normal speed at different times). The spatial calibration should be such that virtual paths and movements align with wireframe/schematic dimensions for accurate navigation by VR users. (5) A user-friendly interface that either overlays the VR space, or while a user is moving keeps the desired VR locale(s) in front of the VR user so the user can veer off in another direction and/or to a different VR locale if desired. Real-time navigation tools accessible by a VR user's GUI of any suitable type, and personalization of the VR space by a VR user, such as by accessing a features database, is an option to augment the views of the VR space based on user-familiarity attributes, which can enhance information to a VR user along the route to a VR locale.

Crowd-sourcing information based on the experiences of other VR users may include one or more of: (1) Collecting navigational and behavioral data from VR users when in the VR space. (2) Tracking VR users' movement along paths and VR users' created, attended, or observed collaboration events to identify frequently used routes and collaboration locales. (3) Applying data analytics and machine learning (ML). Interpreting the aggregate information of users' movements, such as routes taken through the VR space by a plurality of VR users, and identifying optimal routes, most popular routes, and key areas within the VR space based on the experiences of users. (4) Personalization of a VR map to a particular user is an option to augment the views with familiarity attributes of the particular VR user, which can be stored in a features database and be used to enhance the travel to the VR user's VR locale (also called a destination or VR destination or location or VR location). (5) Refining navigational features of the VR space by incorporating user feedback, allowing for the enhancement of pathfinding algorithms and VR locale markers. For example, some routes may miss the VR user's destination. All of or any of these techniques can be used to generate a VR map positioned in the VR space by a wireframe processor, a mapping engine and/or a VR server. Interface elements may be introduced in the VR space so VR users can move within the VR space and explore it, yet still end up at the VR user's VR locale because the VR map allows travelling within the VR space.

By allowing users to customize their surroundings in a VR space or the constructs encountered along the VR space, such as by accessing a features database to add them, the VR space can be made more personal and easier for a user to navigate because the user becomes familiar with the route(s) and destination(s) in the VR space. Familiarity with the VR space can aid in spatial awareness and orientation. For instance, if a user applies themes from a features database to a meeting room, finding the meeting room in the VR space can be easier for subsequent visits.

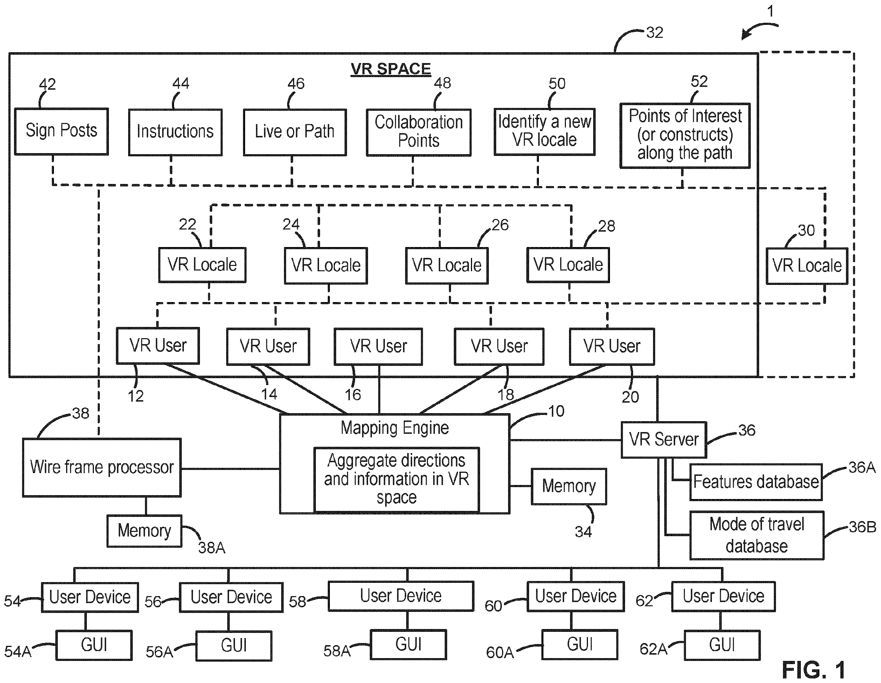

Turning now to the Figures, wherein the purpose is to describe embodiments of this disclosure and not to limit the scope of the claims, FIG. 1 is a block diagram of a computer system 1 according to this disclosure. Computer system 1 comprises (1) a VR server 36 that creates a VR space 32, (2) a VR mapping engine 10 that is configured to map the routes taken by one or more VR users, such as VR user 26, VR user 28, VR user 30, VR user 32, and/or VR user 34 to a VR locale within VR space 32, such as VR locale 22, VR locale 24, VR locale 26, VR locale 28, or VR locale 30 (VR locale 30 is a location within VR space 32 that has not yet been mapped, either because it was recently created or because although previously created, no VR user or VR drone (discussed below) has yet visited and mapped it), such as from one VR locale to another VR locale in VR space 32, and (3) wireframe processor 38, to which data from VR mapping engine 10 is transmitted, and wireframe processor 38, using a wireframe model of VR space 32, adds 3D information to VR space 32 that is accessible to a VR user. The 3D information could include one or more of signposts 42, instructions (or directions) 44, line or path 46, collaboration points (or locales) 48, identifies 50 new locales and adds instructions to travel to a new locale, such as locale 30, and adds 52 points of interest along each path available to a VR user.

VR server 36 is in communication with a features database 36A and a mode of travel database 36B. Each of these databases may be resident on VR server 36 or resident at any suitable location in computer system 1. Mapping engine 10 is in communication with an optional memory 34, which can be used to store directions and other information determined by mapping engine 10 and these stored values are updated based on new information transmitted by VR server 36 to mapping engine 10. Memory 34 may be resident on VR server 36 or be resident at any suitable location in computer system 1. Wireframe processor 38 is in communication with a memory 38A, which can be used to store the 3D information placed into VR space 32. The 3D information can be updated as new information is received by wireframe processor 38 from mapping engine 10.

VR server 36 is in communication with each VR user 12, 14, 16, 18, and 20 that is present within VR space 32 via any suitable device(s), such as a VR user device 54, 56, 58, 60, and 62, each of which has a respective GUI 54A, 56A, 58A, 60A, and 62A that each respective user 12, 14, 16, 18, and 20 can use to communicate with VR server 36 to move into and around in VR space 32. Each user device 54, 56, 58, 60, and 62 may also be in communication with mapping engine 10 or wireframe processor 38, although as shown, mapping engine 10 and wireframe processor 38 are in indirect communication with the user devices through VR server 36, which is in communication with mapping engine 10 and in indirect communication with wireframe processor 38, so that mapping engine 10 can determine the aggregated location(s) and movement(s) of users 12, 14, 16, 18, 20 (or drone 64, discussed further below) through VR space 32 and provide the information to wireframe processor 38.

VR server 36 transmits the movements, location, day, time of day, and travel time to any or each VR locale 22, 24, 26, 28, 30 by any one of, a plurality of, or all of, VR users 12, 14, 16, 18, and 20, to mapping engine 10. Mapping engine 10 also receives from VR server 36 information such as the travel time by a VR user to a VR locale, mode(s) of VR user travel, and VR constructs encountered by the VR user while traveling. This information is aggregated into one or more directions to a VR locale, such as from one VR locale to another. The directions may include one or more of the shortest path, and a path that includes one or more constructs (i.e., points of interest) in which a VR user may wish to view. Directions may also include one or more modes of travel desired by a VR user.

Wireframe processor 38 receives information from mapping engine 10 and creates 3D information to be placed into VR space 32. The information may include signposts 42, instructions 44, live or path 46, collaboration points 48, the identification 50of a new VR locale, and points of interest 52 (such as VR constructs) along each VR route. The 3D information placed into VR space 32 is preferably updated constantly as one or more users access VR space 32. Mapping engine 10 can determine routes, user aggregation (i.e., collaboration) at a common location, and constructs in the VR space 32 at which a VR user stops or passes as the VR user travels in VR space 32. These are available in the directions provided in VR space 32 either directly by wireframe processor 38, or indirectly, such as through VR server 36. Utilizing the 3D information, a VR user may, for example, select a desired (1) path to a particular VR locale, (2) path to an event, (3) path to a collaboration, (4) fastest route to a VR locale, (5) a route between VR locales in VR space 32, (6) route that takes the VR user past one or more certain constructs, or (6) mode(s) of travel.

VR space 32 may include any number of VR users at any given time, and more or fewer VR users may visit VR space 32 at any given time and the number may increase or decrease. VR space 32 may include any number of VR locales, collaborations, or events, at any given time and the number may increase or decrease over time.

A collaboration is a gathering of a plurality of VR users at a VR locale, such as five or more VR users, ten or more VR users, twenty or more VR users, or fifty or more VR users, or any number of VR users, that software functioning on system 1, such as on VR server 36 or mapping engine 10, has been programmed to determine is a collaboration. An event is any experience within VR space 32 that may be of interest to a VR user, such as a book reading, a meeting, an orchestra performance, a game, sport, video or image viewing or sharing, or music listening or sharing. A construct can be any 3D replication of a physical object, such as a shop, building, river, lake, creek, stream, waterfall, pond, ocean, beach, fountain, park, garden, field, game space, castle, meeting room street features (such as a sidewalk, street, or street light), zoo, forest, sky, stars, swamp, mountain, planets, people, and animal, or other 3D object within VR space 32. A construct may be static or may be dynamic. A construct may be represented by an avatar.

Modes of traveling through the VR space 32 include walking, running (jogging), automobile (driving or passenger), bus, train, plane, hang gliding, VR user flying, boat, submarine, speed of travel, or any combination of travel, and relative height within VR space 32. The mode(s) and speed of travel through VR space 32 can be selected by a VR user using a GUI 54A, 56A, 58A, 60A, or 62A to access mode of travel database 36B. The mode of travel and speed of travel can be changed by the VR user while traveling, and the VR user can also change the path or the VR locale destination while traveling through VR space 32.

The VR user may, utilizing a GUI, such as GUI 54A, 56A, 58A, 60A, or 62A, connected to or included as part of user device 54, 56, 58, 60, or 62, access features database 36A and customize a path through VR space 32 by adding colors or audio or visual features, and constructs, in the VR space 32.

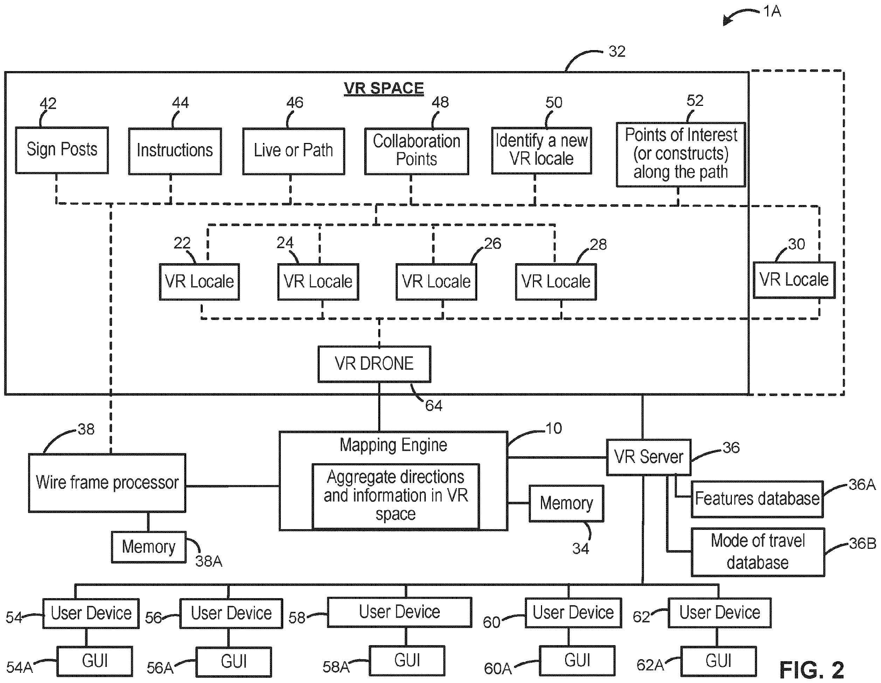

FIG. 2 shows an alternate computer system 1A according to this disclosure that is the same as computer system 1 of FIG. 1 except that it utilizes a VR drone 64 to map VR space 32 instead of the movements of VR users, such as VR users 12, 14, 16, 18, and 20, to determine attributes of and directions within VR space 32. VR drone 64 scans (akin to a physical drone flying over a physical space) and identifies various VR locales, such as VR locales 22, 24, 26, 28, and any newly created or previously unmapped VR locale, such as VR locale 30. VR drone 64 also identifies a part of or the entire landscape of VR space 32, which includes constructs and relative VR distances between VR locales, such as VR locales 22, 24, 26, 28, and any new or previously unmapped VR locales, such as VR locale 30. There may be more than one VR drone 64.

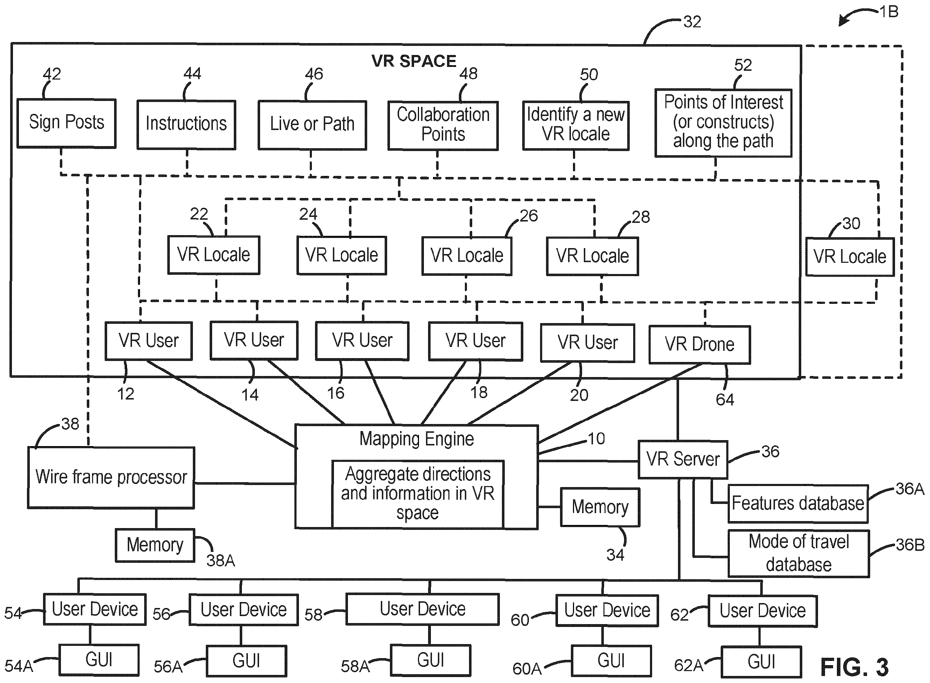

The identification of VR space 32 captured by the VR drone(s) 64 is transmitted to VR server 36 which transmits the information to mapping engine 10. Mapping engine 10 analyzes the information and identifies one or more directions to a VR locale, such as from one VR locale to a different VR locale. As an example, mapping engine 10 may identify multiple routes from VR locale 22 to one or more VR locales 24, 26, 28, and a new or unmapped VR locale, such as VR locale 30. The information created by mapping engine 10 can be saved in memory 34. The routes determined by mapping engine 10 and optionally VR constructs along each route are transmitted to wireframe processor 38, which adds the VR route(s), constructs, and VR locales to a 3D wireframe of VR space 32 with X, Y, and Z coordinates. The wireframe processor 38 adds to VR space 32 information accessible by a VR user, such as VR users 12, 14, 16, 18, and 20 (shown in FIGS. 1 and 3), that assists the VR user in navigating VR space 32. The accessible information may include signposts 42, instructions 44, live or path 46, collaboration points 48, the identification 50 of a new VR locale, and points of interest 52 (such as VR constructs) along each VR route.

FIG. 3 shows an alternate computer system 1B according to this disclosure that is the same as computer system 1 of FIG. 1 except that it utilizes a VR drone 64 plus an aggregation of the movements of VR users, such as VR users 12, 14, 16, 18, and 20, to determine attributes of, and directions within, VR space 32. VR drone 64 scans (akin to a physical drone flying over a physical space) and identifies the various VR locales, such as VR locales 22, 24, 26, 28, and any newly created or unmapped VR locale, such as VR locale 30. VR drone 64 also identifies a part of or the entire landscape of VR space 32, which includes constructs and relative VR distances between VR locales, such as VR locales 22, 24, 26, 28, and any new VR locales, such as new VR locale 30. There may be more than one VR drone 64 and any number of VR users monitored by mapping engine 10. The VR users also provide attributes of, locations within, and directions in VR space 32. Information from VR drone 64 and the VR users is sent to VR server 36.

The identification of VR space 32 captured by the VR drone(s) 64 and one or more VR users, such as users 12, 14, 16, 18, and 20, is transmitted by VR server 36 to mapping engine 10, which analyzes the information and identifies one or more directions to a VR locale, such as from one VR locale to a different VR locale. As an example, mapping engine 10 may identify multiple routes from VR locale 22 to one or more VR locales 24, 26, 28, and a new or unmapped VR locale, such as VR locale 30. The information created by mapping engine 10 can be saved in memory 34. The routes and optionally VR constructs along each route are sent to wireframe processor 38, which adds the VR route(s), constructs, and VR locales (or any new or unmapped VR locales) to a 3D wireframe of VR space 32 with X, Y, and Z coordinates. The wireframe processor 38 adds to VR space 32 information accessible to a VR user, such as VR user 12, 14, 16, 18, or 20, that assists the VR user in navigating VR space 32. The accessible information may include signposts 42, instructions 44, live or path 46, collaboration points 48, the identification 50 of a new VR locale, and points of interest 52 (such as VR constructs) along each VR route.

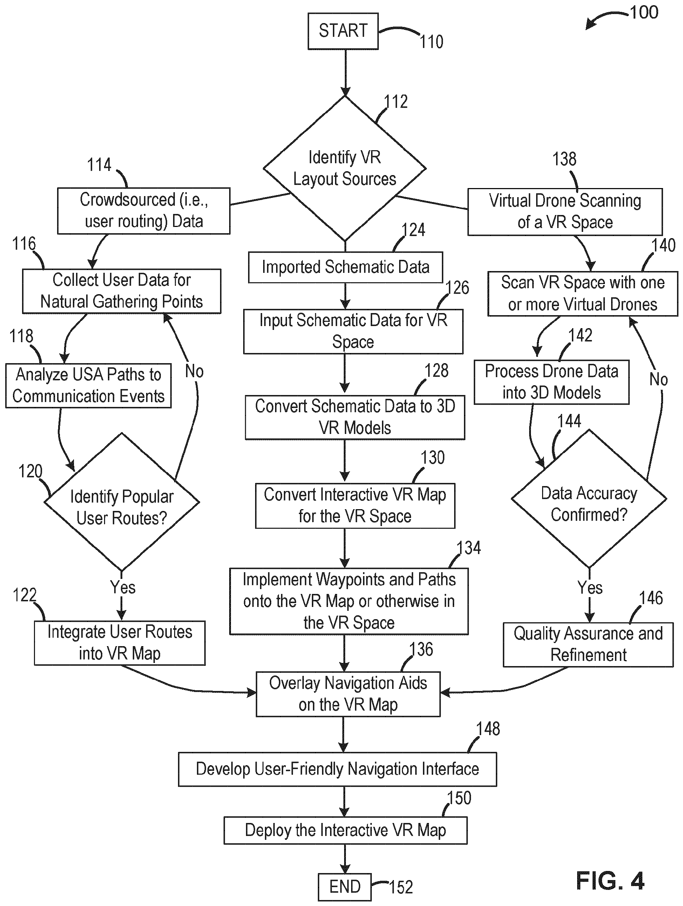

FIG. 4 shows a computer method 100 according to this disclosure. The method 100 starts at step 110. At step 112 VR layout sources are located and at step 114 crowd sourced (or user) data based on one or more user's paths taken and observations in VR space 32 are collected. At step 116, the VR user data is collected and aggregated, and user gathering locations (or collaboration points) within the VR space 32. At step 118, routes through VR space 32 to VR locales and to user gathering locations are analyzed by mapping engine 10. Popular user routes are identified at step 120. If popular VR user routes are identified at step 120, the routes are integrated into a VR map by wireframe processor 38 at step 122. If no popular VR user routes are identified, steps 116, 118, and 120 are repeated in order to identify the popular. When routes are integrated by wireframe processor 38 into a VR map, navigation aids, such as signposts 42, instructions 44, line or path 46, collaboration points 48, new VR locales and directions thereto 50, and constructs of interest 52, are overlaid onto the VR map or otherwise placed into VR space 32 at step 136.

At steps 124, 126, schematic data from wireframe processor 38 is imported to VR space 32. The schematic data is converted to 3D VR models at step 128 and is converted to an interactive VR map in VR space 132 at step 130. Waypoints and paths are implanted into VR space 132 at step 134, and navigation aids are overlaid on the VR map or otherwise placed in VR space 132 at step 136.

At step 138, the method may use virtual drone scanning in place of or in addition to VR user data. At step 140, the VR drone scans the VR space 32 with one or more virtual drones, such as drone 64. The virtual drone data is processed into 3D models using mapping engine 10 and wireframe 38 at step 142, and the data accuracy is confirmed at step 144. The data accuracy can be determined by an artificial intelligence (AI) processor that compares the data to a wireframe schematic of the VR space 32 to ensure, for example, that VR locales exist and that determines the relative location of each VR locale to each other VR locale. The AI processor learns and updates as VR space 32 changes over time, such as by expanding, contracting, or having VR locales added or removed. The data accuracy can also be checked by comparing the data to existing data in ore or more of memory 34, 34A, or 36. If the data accuracy is confirmed at step 144, quality assurance and refinement is performed at step 146. If the data accuracy is not confirmed at step 144, steps 140, 142, and 144 are repeated. After step 146, navigation aids, such as signposts 42, instructions 44, line or path 46, collaboration point 46, directions 50 to a new VR locale, and points of interest along a path 52 are overlaid on the VR map at step 136.

At step 148 a user-friendly navigation interface, which may be accessible to each user, such as user 14, 16, 18, 20, or 22 through the GUI 54A, 56A, 58A, 60A, 62A of respective user devices 54, 56, 58, 60, and 62, is developed and an interactive VR map is generated in VR space 32 at step 150. Method 100 ends at step 152.

The description of embodiments provided herein is merely exemplary and is intended for purposes of illustration only; the following description is not intended to limit the scope of the claims. Moreover, recitation of multiple embodiments having stated features is not intended to exclude other embodiments having additional or fewer features or other embodiments incorporating different combinations of the stated features. The methods and systems according to this disclosure and claims can operate in a premise, cloud-based, or hybrid environment.

The features of the various embodiments may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computerized method for mapping a virtual reality, VR, space created by a VR server, wherein the method comprises:
utilizing a user device, in communication with the VR server, positioning one or more a user into the VR space;
the user utilizing the user device to move from a first VR locale to a second VR locale within the VR space;
the user device or the VR server communicating the user's movement to a VR mapping engine;
the VR mapping engine being in communication with a memory and the memory being configured to store (a) the identity of the VR user, (b) the date and time the VR user entered and exited the VR space, (c) the route taken by the VR user from the first VR locale to the second VR locale, (d) VR constructs along the route taken by the user, and (e) the VR locale at which the VR user started and the VR locale at which the VR user stopped;
the VR mapping engine generating a route between the first VR locale and second VR locale based on the user's route, and including the VR constructs that the user encountered along the route;
a wire frame processor in communication with the VR mapping engine, wherein the wireframe processor receives instructions from the VR mapping engine to generate the route in VR and to make the map accessible to a user that enters the VR space.

2. The computerized method of claim 1 that further includes the step of analysing user aggregation data to determine popular user locales in the VR space.

3. The computerized method of claim 2, wherein each popular locale has a rank based upon (a) the number of users who have visited it, and (b) the dates and times during which it has been visited, and wherein the rank is made available to users.

4. The computerized method of any preceding claim, that further comprises a plurality of users and the step of identifying the route is based on a most used route to a least popular route based upon (a) the number of users who have travelled the route, and (b) the dates and times during which the route has been travelled.

5. The computerized method of any preceding claim, that further includes the step of mapping each route onto a VR map using the VR wireframe.

6. The computerized method of any preceding claim, that further comprises the step of the VR space being expanded to add an expanded portion or contracted to exclude a contracted portion by imported schematic data to the VR server and the VR map being adjusted accordingly to include the expanded portion of the VR space or to exclude the contracted portion of the VR space.

7. The computerized method of any preceding claim, that further comprises the step of the mapping engine generating signposts, arrows, lines, or other indica to position in the VR space by the VR server in order to guide the VR user to a different VR locale and optionally wherein the signposts, arrows, lines, or other indicia can guide the user along a route to a predetermined VR locale and suggest an alternate route to the predetermined locale or offer a different VR locale destination.

8. The computerized method of claim 7, wherein the signposts, lines or other indicia are overlaid onto the wireframe model before being positioned in the VR space by the VR server.

9. The computerized method of any preceding claim, that further includes a virtual drone created by the VR server, wherein the virtual drone is configured to analyse to VR space, wherein the method further comprises the step of the virtual drone analysing the VR space and sending communications from the VR server to the mapping engine to map the VR space.

10. The computerized method of claim 9, wherein the virtual drone is used to verify the accuracy of VR directions created by the VR user.

11. The computerized method of claim 10, wherein the directions are continually updated.

12. The computerized method of any preceding claim, wherein points of interest are included along each route and/or wherein a content summary of each destination is included.

13. The computerized method of any preceding claim, that further includes mapping spaces outside of virtual buildings and inside of virtual buildings, by hovering a VR device on the VR space.

14. The computerized method of any preceding claim, that further includes the step of providing a GUI capability of automatically transferring the VR user from one locale to another.

15. A computer system configured to map a VR space created by a VR server, wherein the system comprises:
utilizing a user device, in communication with the VR server, positioning one or more a user into the VR space;
the user utilizing the user device to move from a first VR locale to a second VR locale within the VR space;
the user device or the VR server communicating the user's movement to a VR mapping engine;
the VR mapping engine being in communication with a memory and the memory being configured to store (a) the identity of the VR user, (b) the date and time the VR user entered and exited the VR space, (c) the route taken by the VR user from the first VR locale to the second VR locale, (d) VR constructs along the route taken by the user, and (e) the VR locale at which the VR user started and the VR locale at which the VR user stopped;
the VR mapping engine generating a route between the first VR locale and second VR locale based on the user's route, and including the VR constructs that the user encountered along the route;
a wire frame processor in communication with the VR mapping engine, wherein the wireframe processor receives instructions from the VR mapping engine to generate the route in VR and to make the map accessible to a user that enters the VR space.
